# EUROPEAN PATENT APPLICATION

(11) **EP 3 719 640 A1**
(43) Date of publication of application: **07.10.2020**
(21) Application number: 19167313.6
(22) Date of filing: 04.04.2019
(51) Int. Cl.: G06F 9/4401, G06F 9/445, G06F 21/57

(54) **ELECTRONIC DEVICE AND METHOD FOR OPERATING AN ELECTRONIC DEVICE**

(71) Applicant: Rohde & Schwarz GmbH & Co. KG, 81671 München (DE)
(72) Inventor: WILLE, Raimund, 85560 Ebersberg (DE); FRIEDL, Richard, 85540 Haar (DE); GANSLMEIER, Bernhard, 83024 Rosenheim (DE)
(74) Representative: Isarpatent

(57) **Abstract**

Electronic device and a method for operating an electronic device providing an improved initialization of the electronic device. Operational data such as software components or configurational data are stored in a removable storage device during the operation of the device. By removing the removable storage device and inserting the removable storage device into another device, the other device can be automatically initialized and configured similar to the former electronic device.

## Description

### Technical Field

The present invention relates to an electronic device and a method for operating an electronic device. In particular, the present invention relates to an improved configuration of a software controlled electronic device.

### Background

Although applicable in principle to any electronic device, the present invention and its underlying problem will be hereinafter described by example of a wireless communication device such as a software defined radio.

For systems with high availability, a number of replacement devices are usually provided. If a device fails, the faulty device will be replaced by a functional device. When replacing the faulty device by another device, the new device has to be configured exactly like the faulty device.

Many modern devices are controlled by software. For example, wireless communication devices such as a radio may be realized as a software defined radio (SDR). Thus, when replacing a faulty software controlled device by a replacement device, the software of the replacement device has to be configured the same as the software of the faulty device. For this purpose, a service engineer has to install the latest software version and to configure the software, for example by setting a number of configuration parameters. This task of installing and configuring the software of a replacement device require a huge amount of time. Hence, the use of a replacement device might be delayed.

Against this background, the present invention aims to provide an electronic device and an operation method for operating an electronic device which provides an improved and accelerated configuration of a new electronic device in line with the configuration of a previously used electronic device.

### Summary

The present invention solves this problem with an electronic device and a method for operating an electronic device with the features of the independent claims. Further advantageous embodiments are subject matter of the dependent claims.

According to a first aspect, an electronic device is provided. The electronic device comprises a processing device and an interface. The processing device is configured to control the electronic device based on operational data. The operational data comprise at least an operating system and configuration data. The interface is communicatively coupled to the processing device. The interface is configured to receive a removable storage device. The processing device is further configured to store the operational data in the removable storage device inserted in the interface.

According to a second aspect, a method for operating an electronic device is provided. The method comprises controlling the electronic device based on operational data. The operational data comprise an operating system and configuration data. The method further comprises a step of storing the operational data in a removable storage device inserted in an interface which is communicatively coupled to the electronic device.

The present invention is based on the fact that many electronic devices are controlled by a software. Thus, when replacing an electronic device by another electronic device of a same type, the software and the configuration of the replacement device has to be adapted in line with the configuration of the former device in order to provide same functionality. However, installing and configuring software may be a complex and time consuming task.

Thus, it is an idea of the present invention to take into account this finding and provide an improved electronic device which can be installed and configured more easily based on a configuration of a similar device which has been used before. For this purpose, all relevant data such as operating system and configuration parameters may be stored on a removable storage device. Hence, when replacing a device by another device, the removable storage device can be removed from the former device and inserted into the new device for immediately configuring and starting the new device. In this way, the complex and time consuming installation process of software can be avoided. Hence, the new device can be immediately started based on the configuration of the former used device.

The electronic device may be any kind of device which is controlled or operated based on software and/or specific configurations or parameters. For example, the electronic device may be a communication device, in particular a wireless communication device such as a software defined radio (SDR) or the like. The electronic device may be also any kind of measurement device, for example a signal generator, a spectrum analyzer, vector analyzer, an oscilloscope, etc. However, it is understood that any other kind of electronic device, in particular any kind of device which is controlled or operated by software may be also possible.

The operation of the electronic device may be controlled by the processing device. For example, the processing device may comprise a number of one or more processors. The processing device may load software instructions and perform operations based on the respective instructions. Furthermore, the operation of the processing unit may be configured by a set of parameters. For example, the processing device may run an operating system for controlling the operation of the electronic device. When initializing the electronic device, the operating system may be loaded. Furthermore, configuration data may be also loaded in order to configure the electronic device accordingly. Additionally or alternatively, configuration data may be set by receiving configuration data from another device via an interface or receiving the configuration data from a user, for example, by an input terminal or the like. However, any other kind of providing configuration data may be also possible.

The processing device is communicatively coupled with an interface. The interface may receive a removable storage device. For example, the interface may comprise a slot for receiving a memory card. However, any other kind of interface for receiving a removable storage device may be also possible.

The removable storage device may be any kind of storage device, in particular any kind of non-volatile storage device. For example, the removable storage device may be a memory card. The removable storage device may be also, for example, a solid state drive (SSD) or any other kind of storage device for storing digital data.

Accordingly, the processing device may read data from the removable storage device inserted into the interface, and store data in the removable storage device. In particular, the processing device may store all relevant operational data in the removable storage device which are required for operating and controlling the electronic device. For example, the processing device may store the current software version of the software which is executed by the processing device. In particular, the processing device may store the current version of the operating system executed by the processing device. Furthermore, any other relevant data which are used by the processing device may be also stored in the removable storage device. In this way, all relevant data which are required for the operation of the processing device are also available on the removable storage device.

Thus, when an electronic device is replaced by another electronic device, the removable storage device can be removed from the former electronic device and inserted into the replacement device. When starting and initializing the replacement device, the replacement device may read all relevant data, in particular the operating system and the configuration data, and automatically initialize and configure the replacement device accordingly. In this way, the replacement device is automatically configured based on a configuration corresponding to the configuration of the former electronic device. Hence, no further interaction of a user is required for installing software or configuring the replacement device.

Further embodiments of the present invention are subject of the further subclaims and the following description referring to the drawings.

In a possible embodiment, the operational data comprise at least one of a driver software, an application program, operational parameters or configuration parameters.

Further to the operating system of the electronic device, the operational data may also comprise additional software components and/or configuration information. For example, the software components may comprise drivers for specific hardware components. Additionally or alternatively, the operational data may also comprise one or more application programs. For example, an application program may provide a specific functionality of the device. Since software components may be updated over time, drivers and/or application programs may be replaced by newer versions. In such a case, the processing device may store the latest version of the respective software component in the removable storage device. Hence, the removable storage device always comprises the newest version of the relevant software components comprising not only the operating system but also the required drivers and application software. Furthermore, all required parametrization and configuration data of the electronic device may be also stored in the removable storage device. For example, the processing device may store all settings received by a user input or via interfaces from external devices. Hence, the data stored on the removable storage device comprise all information required for initialization and configuration of a replacement device such that the replacement device may be operate identically to the former device. No additional user input is required.

In a possible embodiment, the processing device is configured to read the operational data stored in the removable storage device.

The processing device is further configured to control the electronic device based on the read operational data.

In particular, the processing device may read the operation data from the removable storage device when starting and initializing the electronic device. In this way, a new electronic device is automatically initialized and configured based on the data stored in the removable storage device without any additional user operations. Thus, the electronic device can immediately perform the desired operations after the initialization routine is completed.

In a possible embodiment, the processing device is configured to update the operational data in the removable storage device when the operating data changes. In particular, the operational data in the removable storage device are immediately updated when a change of the operational data is detected.

By keeping the data in the removable storage device consistent with the operational data used by the processing device, the data in the removable storage device always represent the configuration of the respective electronic device. Thus, when the electronic device is to be replaced by another electronic device, for example because a failure occurs in the electronic device, the replacement device can be immediately started based on the latest configuration of the former device without any delay in time.

In a possible embodiment, the processing device is configured to encrypt and/or to sign the operational data stored in the removable storage device.

The encryption may be performed by any appropriate known or future encryption algorithm. By encrypting the operational data, an unauthorized access to the operational data can be avoided. Additionally or alternatively, it may also possible to sign the operational data stored in the removable storage device. For example, a hash value or any other kind of signature may be computed based on the operational data stored in the removable storage device. For this purpose, a single signature may be computed for all operational data. Furthermore, it may be also possible to compute individual signatures for multiple parts of the operational data. For example, a separate signature may be computed for each software component or for each part of configuration data.

In a possible embodiment, the electronic device may comprise a key memory. The key memory is adapted to store key data. For example, same key data may be stored for a specific group of electronic devices, in particular a group of same electronic devices. Accordingly, the processing device may be configured to encrypt and/or sign the operational data based on the key data stored in the key memory.

By providing key data for encrypting or signing the operational data, and in particular by providing same key data for a group of electronic devices, all electronic devices of the same group may encrypt/decrypt the operational data. Furthermore, all electronic devices of the same group which use same key data may apply a same signature to the operational data and consequently verify the signature of the signed operational data. In this way, the transfer of the operational data from an electronic device to another electronic device may be limited to electronic devices having same key data.

In a possible embodiment, the processing device is configured to encrypt and/or sign the operational data on the removable storage devise based on a unique identifier of the removable storage device. For this purpose, the removable storage device may provide a tamper-proof unique identifier.

By considering a unique identifier of the removable storage device, the electronic device may verify the authenticity of the removable storage device. In this way, an unauthorized copy of the data in the removable storage device can be prevented.

In a possible embodiment, the processing device is configured to store the operational data in a first section of the removable storage device. Furthermore, the processing device may be configured to store backup data of the operational data in a second section of the removable storage device.

For example, the removable storage device may comprise a number of at least two partitions, and separate partitions may be used for storing the operational data and backup data of the operational data. The backup data may comprise a copy of the operational data stored in the first section. Additionally or alternatively, any other backup scheme may be used. For example, a history of former versions may be also stored in the backup section. Furthermore, the backup data may be stored, for example, in an incremental manner. In this way, the amount of memory for storing the backup data, in particular multiple versions of the backup data, may be reduced.

In a possible embodiment, the processing device is configured to recover the operational data based on the backup data. In particular, the recovering of the operational data based on the backup data may be performed when detecting an integrity error in the data stored in the first section.

For example, the recovery may be performed by an error correction algorithm or the like. If the backup section of the removable storage device comprises a copy of the operational data, the recovery may be also performed by simply copying the backup version. However, any other appropriate manner for recovering the operational data based on the backup data may be also possible.

In a possible embodiment, the electronic device comprises a housing. The housing of the electronic device may comprise a detachable cover. The detachable cover is configured to prevent a removal of the removable storage device when the detachable cover is in a closed position. For example, the cover may lock the removable storage device such that the storage device cannot be removed without removing the cover. Thus, the removable storage device may be locked by the detachable cover. For example, a special tool has to be used for removing the detachable cover and to remove the removable storage device. In this way, unauthorized access to the removable storage device can be prevented.

In a possible embodiment, the removable storage device may comprise a non-volatile memory. In particular, the removable storage device may comprise a secure digital memory card (SD Card) or the like.

In a possible embodiment, the electronic device may comprise a wireless communication device, for example a software defined radio. Alternatively, the electronic device may also comprise a measurement device, for example a signal generator, a spectrum analyzer, a vector analyzer or an oscilloscope. However, any other kind of electronic device, in particular any kind of electronic device which is controlled by software and/or which is configured by a number of specific parameters may be also possible.

With the present invention it is therefore now possible to replace an electronic device by another electronic device of a same type without the need of a time consuming installation of software and/or parameterization. By continuously recording the current software and/or configuration of the electronic device on a removable storage device, all relevant information for initialization and configuring the electronic device are available on the removable storage device. Thus, by inserting such a removable storage device in a new electronic device of a same type, the new electronic device may be automatically initialized and configured based on the data stored on the removable storage device. In this way, a replacement device can be immediately used upon starting and initializing the device based on the data stored in the removable storage device.

### Brief description of the drawings

For a more complete understanding of the present invention and the functions thereof, reference is now made to the following description in conjunction with the accompanying drawings. The invention is explained in more detail below using exemplary embodiments which are specified in the schematic figures of the drawings, in which:
- Fig. 1:: shows a schematic diagram of an electronic device according to an embodiment;
- Fig. 2:: shows a schematic diagram of a memory configuration of a removable storage device used in an electronic device according to an embodiment;
- Fig. 3:: shows a flow diagram of a method for operating an electronic device according to an embodiment.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawings. The elements in the drawings are not necessarily shown in scale.

In the drawing, same, functionally equivalent and identical operating elements, features and components are provided with same reference signs in each case, unless stated otherwise.

### Detailed description of the drawings

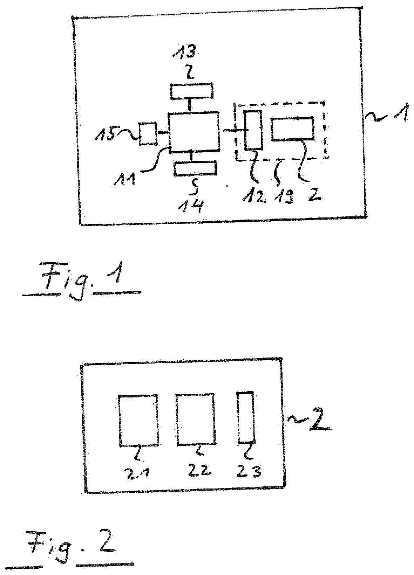

Fig. 1 shows a schematic diagram of an electronic device 1 according to an embodiment. The electronic device 1 may be any kind of electronic device which is controlled, at least in part, by software. For example, the electronic device 1 may be a communication device such as a wireless communication device, for example a software defined radio (SDR). The electronic device may be also, for example, a measurement device, for example a signal generator for generating test signals, a spectrum analyzer, a vector analyzer, an oscilloscope or the like. For example, the electronic device 1 may be a measurement device for testing mobile phones in a production line of mobile phones. Hence, when a failure in such a measurement device occurs, the measurement device should be replaced by another measurement device within a short period of time. It is for this purpose that the new measurement device which replaces a measurement device with a failure should be installed and configured as quickly as possible. However, any other electronic device, in particular any other electronic device which is controlled by a software or which requires a complex configuration by a user or via another external device, may be also possible.

The electronic device 1 comprises a processor 11 and an interface 12. Furthermore, the electronic device 1 may also comprise a key memory 13, an operating memory 14 and/or an input/output interface 15. Processing device 11 may be configured to control the operation of the electronic device 1. For this purpose, processing device 11 may comprise one or more processors which execute predetermined instructions for executing an operating system. For example, processing device 11, in particular the number of processors of processing device 11 may be communicatively coupled with an operating memory 14. Thus, processing device 11 may read instruction from memory 14 and execute the respective instructions. Furthermore, any kind of configuration data may be also stored, for example, in memory 14, and processing device 11 may read the configuration parameters and control the operation of the electronic device 1 based on the respective configuration data.

Processing device 11 may receive input signals such as measurement signals or the like, process the received signals and provide an output based on the processed input signal. For example, input signal may be a measurement signal which is processed in order to provide an appropriate measurement result. Furthermore, it may be also possible to receive specifications for generating a desired measurement signal which is provided to a device under test. If the electronic device 1 is a communication device, the processing device 11 may receive analog or digital data, process the received data and generate a wireless communication signal, for example a modulated wireless signal based on the received input signal. Furthermore, a modulated wireless signal may be received and demodulated in order to extract the data of the modulated signal. However, it is understood that any other kind of operation may be also performed by processing device 11.

For this purpose, appropriate software code may be provided to processing device 11 in order to perform the desired operations. The software code may also comprise, for example, software code for driving a further device or component of the electronic device 1. For example, the driver may be driver of an analog or digital interface or the like.

Furthermore, processor 11 may run one or more application programs in order to perform desired applications. For example, an application program may specify a desired signal waveform for generating a test signal. The application program may be also, for example, a specific kind of modulation or encryption for performing a desired operation. For example, a software defined radio may apply a specific encryption/decryption for secure communication. Additionally, any kind of configuration data may be also provided to processing device 11. For example, a user may enter specific parameters by means of an input/output interface 15. Furthermore, it may be possible to receive configuration data from an external device, for example by an appropriate communication interface. Thus, processing device 11 may perform desired operations based on the provided software code and/or the provided configuration data.

As already described above, processing device 11 is communicatively coupled with an interface 12. Interface 12 may be configured to receive a removable storage device 2. For example, the removable storage device may be a memory card such as a secure digital memory card or the like. Removable memory device 2 may be also, for example, a solid state disc (SSD). However, it is understood that any other kind of removable storage device, in particular any kind of removable storage device providing a non-volatile memory may be also possible.

Processing device 11 may store all relevant operational data in the removable storage device 2 inserted into the interface 12. In particular, processing device 11 may store the software code of the operating system, the required drivers, the application programs and all configuration and parameter data in the removable storage device 2. In this way, all required information for the operation of processing device 11 are stored in the removable storage device 2. The data stored in the removable storage device 2 are kept up to date with respect to the software and the configuration data used by processing device 11. In other words, each time the software used by processing device 11 is updated, the respective data in the removable storage device 2 are updated, too. Furthermore, each time a configuration or a setting of the processing device 11 is changed, the respective data in the removable storage device 2 are also stored. In this way, all relevant data for the operation of the processing device 11 are available in the removable storage device 2.

In order to prevent an unauthorized removal of the removable storage device 2, the electronic device 1 may comprise a housing (not shown). The housing may comprise a detachable cover 19. The detachable cover 19 may cover the removable storage device 2 inserted into the interface 12 in such a manner that the removable storage device 2 cannot be removed without removing the detachable cover 19. In order to provide a further security feature, a special tool may be required for removing the detachable cover 19 before removing the removable storage device 2.

The electronic device 1 may be replaced by another electronic device 1 for some reasons. For example, a failure may occur in the electronic device 1. When replacing the electronic device 1 by another electronic device 1, the removable storage device 2 may be removed from interface 12 and inserted into the new electronic device 1. Thus, all software components and all configuration data are available to the new electronic device 1 by the inserted removable storage device 2. When starting the new electronic device 1, processing device 11 may load the required software components from the removable storage device 2 and configure processing device 11 and the whole electronic device 1 based on the configuration data stored in the removable storage device 2. In this way, the new electronic device 1 is automatically initialized and configured identically to the former electronic device 1. In particular, no additional user action for installing software and/or configuring the electronic device 1 is required. Thus, the new electronic device 1 is starting its operation immediately when loading the respective data from the removable storage device 2.

In order to further improve the reliability and the security of the data stored in the removable storage device 2, the data may be encrypted and/or signed. For example, key data may be provided by a key memory 13. Thus, processing device 11 may encrypt the operational data before storing the operational data in the removable storage device 2. By providing same key data to a group of same electronic devices 1, all electronic devices 1 having same key data may access a removable storage device 2 comprising operation data which are encrypted based on the respective key data. In this way, an electronic device 1 having the appropriate key data may be easily replaced by another electronic data 1 having the same key data. Furthermore, the reliability of the operational data may be further improved by signing the data stored in the removable storage device 2. For this purpose, processing device 11 may also refer to appropriate key data of key memory 13 for signing the data stored in the removable storage device 2. For example, a hash value or the like may be computed for signing the operational data. It may be possible to compute a single signature for a whole set of operational data stored in the removable storage device 2. Furthermore, it may be also possible to sign each part of operational data separately. For example, the operating system, each driver and each application program may be separately signed. Furthermore, each group of configuration data may be also signed separately. In this way, it is only necessary to compute a signature for those data which have been changed when storing new data to the removable storage device 2. Thus, the computational effort for computing the signature may be reduced.

Furthermore, the encryption and/or the signature may be also related to an identifier of the removable storage device 2. For example, each removable storage device 2 may provide tamper-proof data such as an identifier or specific key data which cannot be changed. By considering such tamper-proof data of a removable storage device 2, for example by encrypting the data accordingly, the stored operational data are only valid for a specific removable storage device 2. In this way, copying the data stored in a removable storage device 2 to another removable storage device 2 can be prevented.

Fig. 2 shows a schematic diagram of a memory arrangement of a removable storage device 2. The memory of the removable storage device 2 comprises a first section 21, a second section 22 and a tamper-proof section 23. For example, the first section and the second section may relate to separate partitions of a recording medium. In a first section 21, the above described operational data of processing device 11 may be stored. Furthermore, each time a software component or a configuration of processing device 11 is changed, the respective data in the first section 21 of the removable storage device 2 are changed, too. In addition, backup data of the operational data stored in the first section 21 may be stored in the second section 22. For example, a copy of the data stored in the first section 21 may be stored in the second section 22. Furthermore, a history of the changes applied to the operational data may be stored in the backup section 22. For this purpose, an incremental storage of the changes may be recorded in the second section 22. However, any other approach for storing backup data and a history of the changes may be also possible. Thus, when an error in the data stored in the first section 21 is detected, the respective data may be recovered by referring to the backup data stored in the second section 22. Furthermore, it may be even possible to return to a previous version of the software and/or the configuration, when the operational data stored in the first section 21 may cause a malfunction or the like.

The tamper-proof section 23 may provide, for example, a unique identification of the respective removable storage device 2. For example, a unique identifier may be provided. Furthermore, appropriate key data for encrypting the data when storing the data in the removable storage device 2 may be provided. Hence, by using tamper-proof unique information provided by the tamper-proof section 23 when encrypting and/or signing the data stored in the removable storage device 2, an unauthorized copying of the data can be prevented.

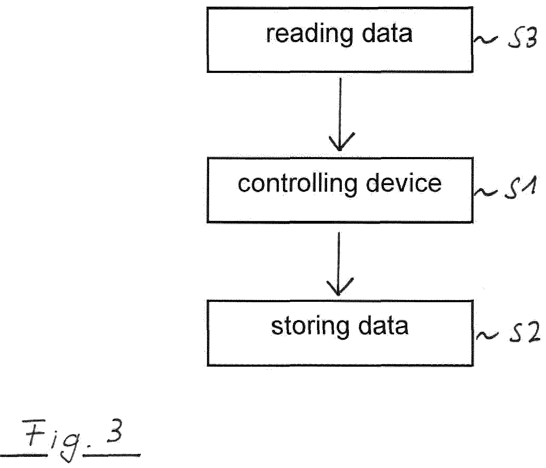

Fig. 3 shows a flow diagram of a method for operating an electronic device according to an embodiment. In a step S1, the electronic device is controlled based on operational data as described above. The operational data may comprise an operating system and configuration data. Furthermore, any other kind of operational data as described above may be also possible. In step S2, the operational data are stored in the removable storage device 2 which is inserted in an interface 12 communicatively coupled to the electronic device 1.

The operational data may be continuously updated in the removable storage device 2. In particular, the operational data may be updated each time when the operational data of the electronic device 1 changes.

When starting the electronic device 1, the electronic device 1 may be initialized by a step S3 of reading the operational data stored in the removable storage device 2. Accordingly, the electronic device 1 is operated based on the read operational data.

Summarizing, the present invention relates to an electronic device and a method for operating an electronic device providing an improved initialization of the electronic device. Operational data such as software components or configurational data are stored in a removable storage device during the operation of the device. By removing the removable storage device and inserting the removable storage device into another device, the other device can be automatically initialized and configured similar to the former electronic device.

## Claims

1. Electronic device (1), comprising:
a processing device (11) configured to control the electronic device (1) based on operational data, the operational data comprising an operating system and configuration data; and
an interface (12) communicatively coupled to the processing device (11) and configured to receive a removable storage device (2);
wherein the processing device (11) is configured to store the operational data in the removable storage device (2) inserted in the interface (12).

2. Electronic device (1) according to claim 1, wherein the operational data further comprise at least one of a driver software, an application program, operational parameters or configuration parameters.

3. Electronic device (1) according to claim 1 or 2, wherein the processing device (11) is configured to read the operational data stored in the removable storage device (2) and to control the electronic device (1) based on the read operational data.

4. Electronic device (1) according to any of claims 1 to 3, wherein the processing device (11) is configured to update the operational data in the removable storage device (2) when the operational data changes.

5. Electronic device (1) according to any of claims 1 to 4, wherein the processing device (11) is configured to encrypt and/or to sign the operational data stored in the removable storage device (2).

6. Electronic device (1) according to claim 5, comprising a key memory (13) adapted to store key data,
wherein the processing device (11) is configured to encrypt and/or sign the operational data based on the key data stored in the key memory (13).

7. Electronic device (1) according to claim 5 or 6, wherein the removable storage device (2) is configured to provide a tamper-proof unique identifier, and
the processing device (11) is configured to encrypt and/or sign the operational data in the removable storage device (2) based on a unique identifier of the removable storage device (2).

8. Electronic device (1) according to any of claims 1 to 7, wherein the processing device (11) is configured to store the operational data in a first section (21) of the removable storage device (2) and a backup of the operational data in a second section (22) of the removable storage device (2).

9. Electronic device (1) according to claim 8, wherein the processing device (11) is configured to recover the operational data based on the backup data when detecting an integrity error of the data stored in the first section (21).

10. Electronic device (1) according to any of claims 1 to 9, comprising housing with a detachable cover (19), wherein the detachable cover (19) is configured to prevent a removal of the removable storage device (2) when the detachable cover (19) is in a closed position.

11. Electronic device (1) according to any of claims 1 to 10, wherein the removable storage device (2) comprises a non-volatile memory device, in particular a secure digital memory card.

12. Electronic device (1) according to any of claims 1 to 11, wherein the electronic device (1) comprises a wireless communication device, in particular a software defined radio, or a measurement device, in particular a signal generator, a spectrum analyzer or an oscilloscope.

13. Method for operating an electronic device (1), the method comprising:
controlling (S1) the electronic device (1) based on operational data, the operational data comprising an operating system and configuration data; and
storing (S2) the operational data in the removable storage device (2) inserted in an interface (12) of to the electronic device (1).

14. Method according to claim 13, wherein the operational data in the removable storage device (2) are continuously updated when the operational data of the electronic device (1) changes.

15. Method according to claim 13 or 14, comprising
reading (S3) the operational data stored in the removable storage device (2) when initializing the electronic device (1),
wherein the electronic device (1) is operated based on the read operational data.
